# EUROPEAN PATENT APPLICATION

(11) **EP 4 166 822 A1**
(43) Date of publication of application: **19.04.2023**
(21) Application number: 22201549.7
(22) Date of filing: 14.10.2022
(51) Int. Cl.: F16H 61/4157, F16H 61/431

(54) **A METHOD AND AN APPARATUS FOR CONTROLLING A HYDROSTATIC TRANSMISSION OF A WORK VEHICLE**

(30) Priority: 14.10.2021 IT 202100026342
(71) Applicant: CNH Industrial Italia S.p.A., 10156 Torino (IT)
(72) Inventor: Garramone, Adriano, 73100 Lecce (IT); Gravili, Andrea, 73100 Lecce (IT); Liberti, Stefano, 73100 Lecce (IT)
(74) Representative: CNH Industrial IP Department

(57) **Abstract**

A method for controlling a hydrostatic transmission (4) of a vehicle (1), the hydrostatic transmission (4) comprising a variable displacement pump (5) and a hydraulic motor (6) arranged to be supplied by the variable displacement pump (5) to drive an axle (3) of the vehicle (1), the method comprising the steps of determining a first dynamic quantity positively correlated to an overall mass of the vehicle (1) and/or a second dynamic quantity indicative of a slope of a road traveled by the vehicle (1), and controlling a displacement of the variable displacement pump (5) to brake the vehicle as a function of the first and/or second dynamic quantity.

## Description

### TECHNICAL FIELD

The invention concerns a method and an apparatus for controlling a hydrostatic transmission of a vehicle, in particular a work vehicle such as a wheel loader.

### BACKGROUND OF THE INVENTION

Work vehicle like wheel loaders, in particular of a compact type, are normally provided with hydrostatic transmissions to drive the wheels.

A hydrostatic transmission usually includes a variable displacement pump and a hydraulic motor supplied by the pump to drive the wheels.

The variable displacement pump is driven by an internal combustion engine, which is intended for driving also other devices or pumps to carry out auxiliary functions of the work vehicle, such as steering, operating implements, and the like.

In some cases, the displacement of the pump is controlled by a vehicular control unit as a function of a braking request from the driver, for example imparted by means of the depression of a braking pedal.

In particular, a higher depression of the braking pedal corresponds to a greater reduction of the displacement, in turn corresponding to a greater reduction of the vehicle speed. Indeed, the lower is the displacement the lower is the vehicle speed, providing that the engine output speed have not been changed, which is appropriate to ensure a regular performance of the auxiliary functions.

Therefore, in the above cases, the braking of the work vehicle is carried out by exploiting the properties of the hydrostatic transmission.

In this context, a general need is felt to improve the braking performances of the work vehicle.

An object of the invention is to satisfy this need, possibly in a simple and cost effective manner.

### SUMMARY OF THE INVENTION

The object is reached by a method and an apparatus defined by the independent claims.

Dependent claims set out particular embodiments of the invention.

### BRIEF DESCRIPTION OF DRAWINGS

Embodiments of the invention will be disclosed in the following by way of non-limiting examples and with reference to the drawings, wherein:
- Figure 1 is a scheme of a work vehicle comprising an apparatus according to the invention; and
- Figures 2, 3 are graphs of functions linking operative parameters of the work vehicles.

### DETAILED DESCRIPTION OF THE INVENTION

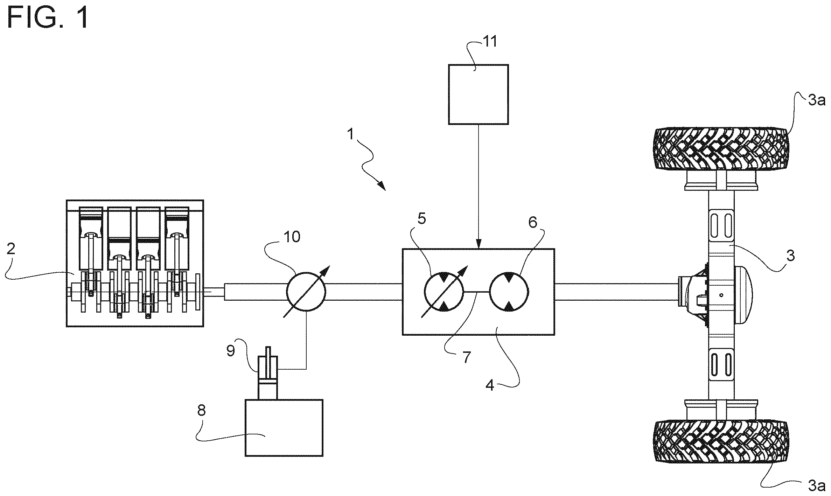

In Figure 1, reference number 1 indicates, as a whole, a motor vehicle, in particular a work vehicle such as a tractor.

Vehicle 1 comprises an engine 2, a drive axle 3, and a hydrostatic transmission 4 as a continuously variable transmission (CVT).

The drive axle 3 can be coupled to the transmission 4, such that the latter can drive the drive axle 3. The drive axle 3 carries a pair of wheels 3a.

Moreover, the transmission 4 can be coupled to the engine 2, such that the latter can drive the transmission 4 and thus the drive axle 3 accordingly.

Therefore, the drive axle 3 can be coupled to the engine 2 via the transmission 4.

The transmission 4 is configured to transmit an output power of the engine 2 to the drive axle 3; the transmission 4 comprises:
- a variable displacement pump 5, in particular connected to the engine 2 to receive at least a portion of the engine output power, and
- a hydraulic motor 6 arranged to be supplied by the pump 5 with a fluid flow and configured to convert the fluid flow into mechanical power to drive the axle 3.

More in detail, the transmission 4 comprises at least one piping 7 connecting an output of the pump 5 to an input of the motor 6.

Preferably, the vehicle 1 further comprises a mechanism 8 configured to manipulate a load, such as bulk materials, solid blocks, clods of land, and the like. For example, the mechanism 8 may comprise an articulated arm ending with a bucket.

Moreover, the vehicle 1 comprises one or more hydraulic cylinders 9 arranged to drive the mechanism 8. For example, the vehicle 1 comprises one hydraulic cylinder 9 for each link of the articulated arm, such that the rotation of the links can be controlled by the hydraulic cylinders 9; additionally or independently, the vehicle 1 comprises a further hydraulic cylinder 9 (the one shown in Figure 1) configured to adjust the orientation of the bucket.

The vehicle 1 may comprise a pump 10 configured to supply one or more corresponding hydraulic cylinders 9. More pumps 10 may be provided, such that all the hydraulic cylinders 9 can be supplied appropriately.

The vehicle 1 further comprises an apparatus for controlling the transmission 4.

The apparatus comprises a control unit 11 configured to carry out a control method of the transmission 4.

Control unit 11 is configured to determine a first dynamic quantity being positively correlated to an overall mass or weight of the vehicle 1.

With detail, the first dynamic quantity is indicative of a momentum of the vehicle 1.

Preferably, the determination of the first dynamic quantity may involve a plurality of steps to be carried out by the control unit 11.

For example, the determination of the first dynamic quantity may involve the determination of two or more further dynamic quantities, such as a speed of the vehicle 1 and an overall mass or weight thereof.

In turn, the overall weight may be determined as the sum of a base weight of the vehicle 1, when the latter is unloaded, and a load weight due to the load carried by the vehicle 1, i.e. more precisely by the mechanism 8, in particular by the bucket.

The base weight is known a priori, for example through measurement or calculation, and may be stored by the control unit 11.

The load weight is determined by control unit 11 by determining an indicative dynamic quantity, such as a pressure within one of the hydraulic cylinders 9, in particular the one for adjusting the orientation of the bucket.

The above pressure is indicative of the load weight because the pressure has to equilibrate the load weight instant by instant, such that the static equilibrium of the vehicle 1 or the mechanism 8 is guaranteed at any instant.

Hence, control unit 11 is configured to derive the load weight from the determined dynamic quantity, i.e. the pressure within the hydraulic cylinder 9. In particular, control unit 11 derives the load weight by solving a static equilibrium equation. For example, the load weight may be equated to a force comprising the product of the pressure and of a piston surface of the hydraulic cylinder 9 on which the pressure acts.

The pressure or, more in general, the indicative quantity may be determined by the control unit 11 by acquisition of one or more signals generated by transducers.

In this case, the apparatus comprises at least one transducer. In particular, the transducer is configured to detect a further quantity indicative of the pressure within the hydraulic cylinder 9 or a more generic quantity anyway indicative of the load weight. Specifically, the transducer includes a pressure sensor. This transducer may be arranged within the hydraulic cylinder 9 or coupled to a piping configured to supply the hydraulic cylinder 9.

The transducer is further configured to generate a signal associated to the detected further quantity. Control unit 11 is configured to acquire the signal and to determine the pressure or the indicative quantity from the acquired signal.

Alternatively, control unit 11 may determine the pressure or the indicative quantity from control signals emitted by the same control unit 11 to control the hydraulic cylinder 9.

In a similar manner, control unit 11 may determine the speed of the vehicle 1 by acquisition of one or more signals generated by transducers. In this case, the apparatus may comprise for example one transducer that is configured to detect a quantity indicative of the speed and to generate an associated signal.

Control unit 11 is then configured to acquire the latter signal and to determine the speed from the same.

Then, control unit 11 determines the first dynamic quantity as a product of the determined overall weight and the determined speed.

Clearly, the weight can be always replaced by the mass in a straightforward manner.

Additionally or alternatively to the first dynamic quantity, control unit 11 can be configured to determine a second dynamic quantity being indicative of a slope of a road traveled by the vehicle 1.

In particular, the apparatus comprises a further transducer configured to detect a quantity indicative of the slope and to generate an associated signal.

Control unit 11 may determine the second dynamic quantity by acquiring the signal generated by this further transducer, which is specifically an inclinometer.

According to the invention, control unit 11 is configured to control the displacement of the pump 5 to brake the vehicle 1 as a function of the first and/or second dynamic quantity.

With greater detail, the control involves a decrease of the displacement correspondingly to an increase of the first dynamic quantity. This holds, in particular, ceteris paribus, i.e. with all other conditions remaining the same.

Indeed, the increase of the first dynamic quantity corresponds to a greater momentum of the vehicle 1, in turn corresponding to a greater effort needed to brake the vehicle 1. Therefore, the decrease of the displacement is helpful to brake the vehicle 1, since causing a deceleration thereof, thus reducing the needed effort.

Additionally or alternatively, the control involves an increase of the displacement when the second dynamic quantity indicates an increase of the slope with the vehicle uphill and/or a decrease of the displacement when the second dynamic quantity indicates a decrease of the slope with the vehicle downhill. Again, this holds, in particular, ceteris paribus.

Indeed, a greater slope of an uphill road corresponds to a natural resistance to the advancing of the vehicle 1, such that the effort needed to brake the vehicle is lower than when the vehicle 1 travels downhill.

Preferably, control unit 11 is configured to control the displacement also as a function of a third dynamic quantity being indicative of a requested deceleration for the vehicle 1.

Control unit 11 is configured to determine the third dynamic quantity, for example by acquiring an associated command signal from a braking command device of the vehicle 1, such as a brake pedal. In particular, the braking command device is operable by a driver of the vehicle 1 and is configured to emit the command signal according to how it is actually operated by the driver.

Precisely, as common, the third dynamic quantity is a current or voltage proportional to a quantity indicative of an operation of the braking command device, like e.g. the depression of the brake pedal. For example, the latter quantity may be an inclination angle of the brake pedal.

More in general, the third dynamic quantity increases with the requested deceleration.

Considering an increasing third dynamic quantity, e.g. a ramp of the latter from a minimum to a maximum value, the control involves a decrease of the displacement.

More specifically, the decrease of the displacement is higher correspondingly to an increase of the first dynamic quantity.

Additionally or alternatively, the decrease of the displacement is lower when the second dynamic quantity indicates an increase of the slope with the vehicle uphill and/or higher when the second dynamic quantity indicates a decrease of the slope with the vehicle downhill.

In detail, control unit 11 stores a mapping function that links the third dynamic quantity to a pump command to be emitted by the same control unit 11; the pump command is suitable for adjusting the displacement.

For example, the pump command may one-to-one correspond or be associated to a derating factor that indicates a corresponding decrement of the displacement. For example, the derating factor can be expressed by a percentage value.

The pump command may be a current or a voltage; the higher is the current or voltage the lower is the corresponding derating factor. In particular, the maximum current or voltage corresponds to a null derating factor, in turn corresponding to a maximum requested displacement of pump 5.

Indeed, the pump 5 is supplied with the current or voltage; in other more general words, the pump 5 receives the pump command emitted by the control unit 11.

The pump 5 is configured such that the displacement decreases with the current or voltage, i.e. with the pump command.

The mapping function is variable based on the first and/or the second dynamic quantity. In other words, the mapping function has multiple variables, including the first and/or the second dynamic quantity, as well as the third dynamic quantity. Namely, in still other words, each of the first, the second, and the third dynamic quantity may independently define a variable of the mapping function. Hence, the mapping function links all its variables to the pump command, or more specifically to the corresponding derating factor.

According to a further interpretation, the mapping function is a function composition.

Control unit 11 is configured to emit the pump command according to the mapping function based on the third dynamic quantity to control the pump 5, taking into account that the mapping function changes or is recomputed based on at least one of the determined first and second dynamic quantity.

This means more specifically that control unit 11 is actually configured to emit the pump command resulting from the application of the mapping function on the determined dynamic quantities that define the variables of the same mapping function (i.e. the third dynamic quantity and at least one of the first and the second dynamic quantity).

For example, the mapping function may be represented by a plurality of curves being each associated to one or more values of a first parameter corresponding to the first dynamic quantity and/or a second parameter corresponding to the second dynamic quantity.

The curves lie on a two-dimensional space defined by the variable corresponding to the third dynamic quantity and by a further variable corresponding to the pump command.

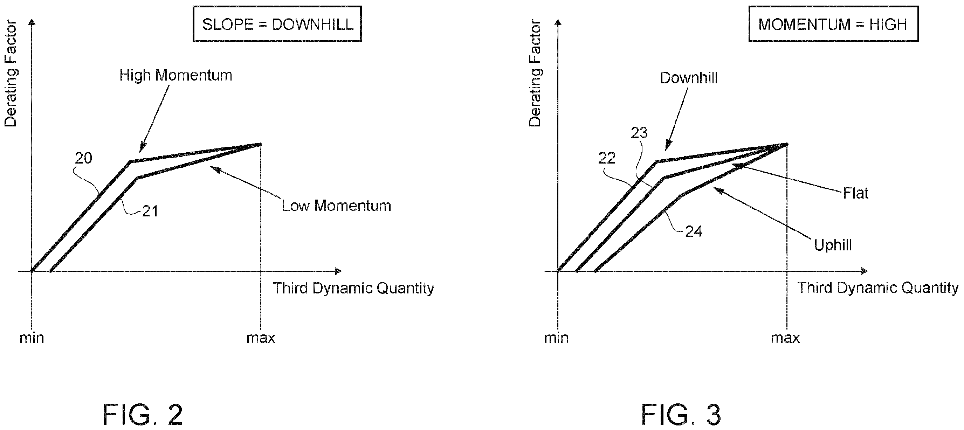

In particular, Figures 2-3 show respective charts that represent the two dimensional space: the abscissa axis represents the variable corresponding to the third dynamic quantity, e.g. a brake pedal position or inclination angle; the ordinate axis represents the variable corresponding to the pump command, e.g. the derating factor.

Figure 2 shows the curves associated to the first parameter, in particular for a specific value of the second dynamic quantity (e.g. vehicle 1 is downhill), more precisely the curves associated to one or more values of the first parameter. In particular, Figure 2 shows two curves 20, 21 respectively associated to a high and a low momentum.

Here, the first parameter is the momentum. The high momentum is defined by a range of momentum values beyond a given threshold, whereas the low momentum is defined by the complementary range of momentum values below or equal to the same threshold.

Clearly, this is not limiting; more than two curves can be provided in association with corresponding ranges of momentum values. Possibly, an infinite number of curves can even be provided in association with corresponding infinite momentum values.

Figure 3 shows the curves associated to the second parameter, in particular for a specific value of the first dynamic quantity (e.g. momentum is high), more precisely the curves associated to one or more values of the second parameter. In particular, Figure 3 shows three curves 22, 23, 24 respectively associated to three respective ranges of inclination values of the road.

Here, the second parameter is the road slope. The curve 22 is associated to downhill roads (e.g. with a slope greater than 10%); the curve 23 is associated to flat roads (e.g. with a slope under 10%); the curve 24 is associated to uphill roads (e.g. with a slope greater than 10%).

Each of the curves 20, 21, 22, 23, 24 is continuous and linear, in particular increasing, more in particular with a plurality of increasing portions with different slopes: specifically, the slopes decrease with the increase of the variable corresponding to the third dynamic quantity.

Furthermore, each of the curves 20, 21, 22, 23, 24 starts from a null derating factor (no decrement of the displacement) and ends on a same maximum derating factor (maximum decrement of the displacement).

The curves 20, 21 start from different values of the third dynamic quantity and end on the same value of the third dynamic quantity. In particular, the curve 21 starts from a higher value of the third dynamic quantity, with respect to the curve 20.

Similarly, the curves 22, 23, 24 start from different values of the variable corresponding to the third dynamic quantity and end on the same value of the same variable. In particular, the curve 23 starts from a higher value of the variable corresponding to the third dynamic quantity, with respect to the curve 22. The curve 24 starts from a higher value of the variable corresponding to the third dynamic quantity, with respect to the curve 23.

The limits of the abscissa axis represent respectively the condition of no request of braking and the condition of the request of maximum braking.

The limits of the ordinate axis represent respectively the condition of maximum and minimum pump displacement (no derating and maximum derating, respectively).

In view of the above, the curves 20, 21, 22, 23, 24 are split into a first set of curves associated to the first parameter and a second set of curves associated to the second parameter.

Control unit 11 is configured to emit the pump command according to one of the curves of the first set for a specific value of the second dynamic quantity or according to one of the curves of the second set for a specific value of the first dynamic quantity.

Each of the just above specific values may be constant, according to a non-limiting example.

Summarizing, the operation of the apparatus is the following.

Control unit 11 determines the first, the second, and the third dynamic quantities. More precisely, control unit 11 determines the actual values thereof for each instant.

Excluding the first instant, control unit 11 considers one of the curves of the second set or the first set of curves.

Control unit 11 selects the curve that is associated to the determined first dynamic quantity for a specific value of the second dynamic quantity or, equally, to the determined second dynamic quantity for a specific value of the first dynamic quantity (e.g. the curve 20 of the first set, which corresponds to the vehicle 1 being downhill and to a high momentum, is the same curve 23 of the second set, which corresponds to the vehicle 1 being downhill and to the high momentum).

Then, from the selected curve, control unit 11 extracts the value of the pump command associated to the determined third dynamic quantity.

Hence, control unit 11 emits the pump command according to the extracted value to adjust the displacement of pump 5.

Control unit 11 implements or carries out a method according to the invention; the method comprises at least the steps of:
a. determining the first dynamic quantity and/or the second dynamic quantity, and
b. controlling the displacement of pump 5 to brake the vehicle 1 as a function of the first and/or second dynamic quantity.

Further optional steps of the method are the following:
c. determining the third dynamic quantity.
d. providing the mapping function,
e. emitting the pump command according to the mapping function, based on the third dynamic quantity determined during step c., to carry out step b.

Preferably, the step a. comprises the following steps:
f. determining a fourth dynamic quantity indicative of the load weight,
g. determining the overall weight of the vehicle 1 as the sum of the load weight indicated by the determined fourth dynamic quantity and the base weight,
h. determining the speed of the vehicle 1,
i. determining the first quantity as the product of the determined overall weight and the determined speed.

In view of the foregoing, the advantages of the apparatus and the method according to the invention are apparent.

Specifically, the braking of the vehicle 1 is optimized thanks to the intelligent control of the hydrostatic transmission 4, based on the determined first and second dynamic quantity.

The first and the second dynamic quantity are specific quantities that are strongly correlated to the braking performances of the vehicle 1. Actually, such performances are extremely sensitive to the first and the second dynamic quantity.

Eventually, it is clear that modifications can be made to the described apparatus and method, which do not extend beyond the scope defined by claims.

For the sake of clarity, the expression dynamic quantity reflects a quantity that is subject to changes over time. In general, all the mentioned quantities that are determined by measurement, e.g. through transducers can be considered dynamic quantities.

## Claims

1. A method for controlling a hydrostatic transmission (4) of a vehicle (1), the hydrostatic transmission (4) comprising a variable displacement pump (5) and a hydraulic motor (6) arranged to be supplied by the variable displacement pump (5) to drive an axle (3) of the vehicle (1), the method comprising the steps of
a. determining a first dynamic quantity positively correlated to an overall mass of the vehicle (1) and/or a second dynamic quantity indicative of a slope of a road traveled by the vehicle (1),
b. controlling a displacement of the variable displacement pump (5) to brake the vehicle as a function of the first and/or second dynamic quantity.

2. The method of claim 1, wherein the step b. comprises a decrease of the displacement correspondingly to an increase of the first dynamic quantity.

3. The method of claim 1 or 2, wherein the step b. comprises an increase of the displacement when the second dynamic quantity indicates an increase of the slope with the vehicle (1) uphill and/or a decrease of the displacement when the second dynamic quantity indicates a decrease of the slope with the vehicle (1) downhill.

4. The method of any of the foregoing claims, further comprising the step of
c. determining a third dynamic quantity indicative of a requested deceleration of the vehicle (1),
wherein the step b. comprises controlling the displacement also as a function of the third dynamic quantity.

5. The method of claim 4, further comprising the steps of
d. providing a mapping function linking the third dynamic quantity to a pump command for adjusting the displacement,
e. emitting the pump command according to the mapping function, based on the third dynamic quantity determined during the step c., to carry out the step b.,
wherein the mapping function is variable based on the first and/or the second dynamic quantity.

6. The method of claim 5, wherein the mapping function is represented by a plurality of curves being each associated to one or more values of a first parameter corresponding to the first dynamic quantity and/or a second parameter corresponding to the second dynamic quantity,
wherein the curves lie on a two-dimensional space defined by two variables respectively corresponding to the pump command and the third dynamic quantity.

7. The method of claim 6, wherein the pump command emitted during the step e. corresponds to the third dynamic quantity determined during the step c. according to one of the curves, said one of the curves corresponding to the first and/or second dynamic quantity determined during step a.

8. The method of claim 6 or 7, wherein the curves are split into a first set of curves associated to the first parameter and a second set of curves associated to the second parameter, wherein the pump command emitted during the step e. corresponds to the third dynamic quantity determined during the step c. according to one of the curves, said one of the curves belonging to the first set when the second dynamic quantity has a first specific value or to the second set when the first dynamic quantity has a second specific value.

9. The method of any of the foregoing claims, wherein the first quantity is indicative of the momentum of the vehicle (1) .

10. The method of claim 9, wherein the step a. comprises the steps of
f. determining a fourth dynamic quantity indicative of a load weight on the vehicle (1) due to a load carried by the vehicle (1),
g. determining an overall weight of the vehicle (1) as the sum of the load weight indicated by the determined fourth dynamic quantity and a base weight of the vehicle (1) when unloaded,
h. determining a speed of the vehicle (1),
i. determining the first quantity as a product of the determined overall weight and the determined speed.

11. The method of claim 10, wherein the fourth quantity is a pressure within a hydraulic cylinder (9) supporting the load.

12. An apparatus for controlling a hydrostatic transmission (4) of a vehicle (1), the hydrostatic transmission (4) comprising a variable displacement pump (5) and a hydraulic motor (6) arranged to be supplied by the variable displacement pump (5) to drive an axle (3) of the vehicle (1), the apparatus comprising a control unit (11) programmed to implement the method of any of the foregoing claims.
